# EUROPEAN PATENT APPLICATION

(11) **EP 1 338 616 A1**
(43) Date of publication of application: **27.08.2003**
(21) Application number: 02075724.1
(22) Date of filing: 22.02.2002
(51) Int. Cl.: C08G 18/42, C08G 18/60, C08G 18/80, C08G 69/48, C08G 63/91

(54) **Process for preparing a high-molecular polyamide, polyester, copolyesters or polyester-amide block copolymer**

(71) Applicant: DSM N.V., 6411 TE Heerlen (NL)
(72) Inventor: Loontjens, Jacobus Antonius, 6231 KK Meerssen (NL)
(74) Representative: Mooij, Johannes Jacobus

(57) **Abstract**

The invention relates to a process for preparing a high-molecular polyamide or polyester or copolyester by melt-mixing polyamide or polyester or copolyester having a lower molecular weight with a blocked diisocyanate having the formula of figure 1.

With the process according to the invention a permanent increase in the molecular weight of a polyamide is obtained within 2 minutes, whereas this takes at least 10 minutes under comparable conditions using a blocked isocyanate according to the state of the art.

## Description

The invention relates to a process for preparing a high-molecular polyamide, polyester or polyester-amide block copolymer by melt-mixing polyamide or a polyester or copolyesters or a mixture of a polyamide and a polyester having a lower molecular weight with a diisocyanate.

Such a process is for example known from DE 430663 A1, in which a diisocyanate is used to increase the viscosity of polyamide-6. The diisocyanate used in the examples of DE 430663 A1 are generally 4,4'-diphenylmethanediisocyanate (MDI) or hexamethylenediisocyanate(HMDI).

Diisocyanates however have the drawback of leading to undesired side-reactions and discoloration of the polyamide, polyester, copolyesters or polyester-amide block copolymer. These side-reactions and discoloration effects of diisocyanate are extensively described by J.Kylmä, et. al. in Polymer 42 (2001)3333-3343, by B. Guo et. al. in Journal of Applied Polymer Science, Vol. 71, 1827-1834 (1999) and by N. Torres et. al. in Journal of Applied Polymer Science, Vol. 79, 1816-1824, (2001).

The invention's aim is hence to provide a process for preparing a high-molecular polyamide, polyester, copolyesters or polyester-amide block copolymer that does not involve the above drawbacks.

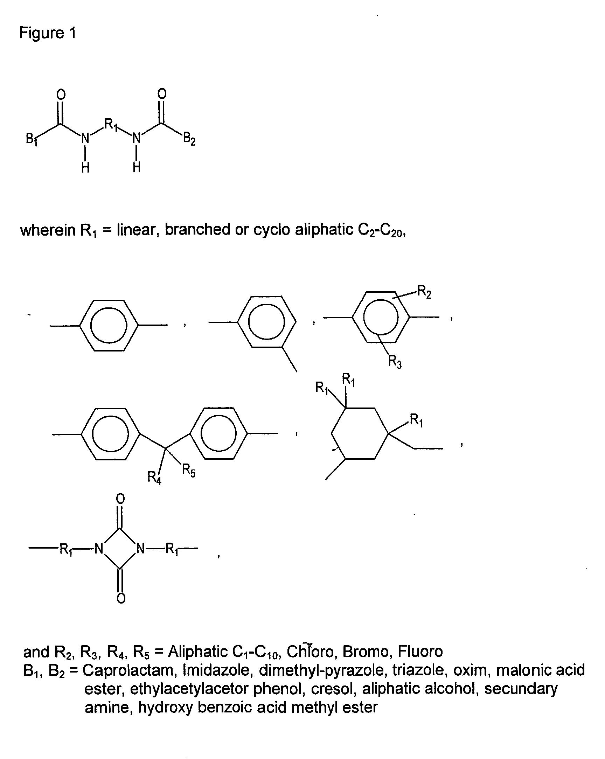

The inventors have now most surprisingly found that when the polyamide, the polyester, copolyesters or mixtures thereof having the lower molecular mass reacts in the melt with a blocked diisocyanate having the formula of figure 1, a colorless, stable linear polyamide or polyester or copolyesters with increased molecular mass is very quickly obtained. Phenylene bisoxazoline or oxazine gives an additional increase in the molecular weight when used next to the blocked isocyanate. The use is optional.

'Blocked diisocyanate' is understood to be a compound having the formula as given in appendix 1:

Blocked diisocyanates are commercially available from Bayer, Dai Nippon Ink, Nippon Polyurethanes, Asahi, Takeda, Rhodia, Baxenden and Creanova.

The amount of blocked diisocyanate used in the process, according to the invention, may vary within a wide range. Usually at least about 0.1 wt.%, relative to the polyamide or the polyester or the copolyesters, will be required to obtain an appreciable effect. Amounts of more than 4 wt.% result only in higher costs.

Usually a person skilled in the art will adjust the amount of blocked diisocyanate to be used to the number of amino or hydroxyl end groups available and the increase in viscosity to be realized as a result of the increased molecular weight. He will usually determine the optimum amount for his situation through simple experimentation.

In principle, the process of the invention can be used for all types of polyamides and polyesters. The polyamides include at least the aliphatic polyamides, for example polyamide-4, polyamide-6, polyamide-8, polyamide-4,6, polyamide-6,6, polyamide-6,10, polyamides derived from an aliphatic diamine and an aromatic dicarboxylic acid, for example polyamide-4,T, polyamide-6,T, polyamide-4,1, in which T stands for terephthalate and I for isophthalate, copolyamides of linear polyamides and copolyamides of an aliphatic and a partially aromatic polyamide, for example 6/6,T, 6/6,6/6,T.

The polyesters include at least polyesters derived from aliphatic dicarboxylic acids and diols, polyesters from aliphatic diols and aromatic dicarboxylic acids, copolyesters that are partially aliphatic and partially aromatic and polyesters that contain units derived from cycloaliphatic dicarboxylic acids. Specific examples are polybutyleen adipaat, polyethyleen terephtalate, polyethyleen naphtalate, polybutyleenterephtalate, copolyesters of polybutyleenadipate and polybutyleenterephtalate, the polyester derived from butanediol and cyclohexane dicarboxylic acid.

Mixutres of polyesters and polyamides are included in the invention as well.

The copolyesters include at least polyesters derived from aliphatic dicarboxylic acids and diols, polyesters from aliphatic diols and aromatic dicarboxylic acids, copolyesters that are partially aliphatic and partially aromatic and polyesters that contain units derived from cycloaliphatic dicarboxylic acids. Specific examples are polybutyleen adipaat, polyethyleen terephtalate, polyethyleen naphtalate, polybutyleenterephtalate, copolyesters of polybutyleenadipate and polybutyleenterephtalate, the polyester derived from butanediol and cyclohexane dicarboxylic acid and polyethers as polyoxytetramethylene, polypropylene glycol, polyethylene glycol and copolyethers of ethylene oxide and propylene oxide, Jeffmines, amino terminal acrylonitril-butadiene copolymers.

The process according to the invention can be carried out in a simple manner using the usual melt-mixing techniques and equipment, for example by dry blending the polyamide or polyester having a lower molecular weight and the blocked diisocyanate and optionally also other additives in a solid state, for example in a tumbler drier, after which the mixture obtained is melted in a usual melt-mixing apparatus, for example a Haake kneader, a Brabender mixer or a single- or double-screw extruder. The different components can also be fed to the mixing apparatus separately.

Best results are obtained if the lower molecular polyamide or polyester are thoroughly dried.

The blocked diisocyanate can also be added to the melted polyamide or polyester product stream in the polymerisation process as it leaves the polymerisation reactor. The polymerisation process can be carried out both batchwise or in a continuous mode. In the first case a reduction of the residence time in the reactor can be realized and thus an increase in productivity; with the continuous process the after-condensation step, that is necessary usually to obtain a polyamide or polyester of sufficient molecular weight can be avoided.

The invention will now be elucidated with reference to the following examples, without however being limited thereto.

### Materials used:

a.1. polyamide-6 having a ηᵣₑₗ = 2.56 measured in formic acid and a concentration of end groups -COOH = 0.052 meq/g -NH₂ = 0.052 meq/g.
a.2. polyethylene terephtalate, PET, having a ηᵣₑₗ = 1,44, measured in m-cresol
b.1. Caprolactam blocked diisocyanate of hexamethylene diisocyanate

### Process:

Nylon-6 was grinded and dried over night at 100°C, in nitrogen under vacuum. The blocked diisocyanate was dissolved in chloroform and mixed with the polymer to achieve a homogeneous mixture. This mixture was dried at 50°C in nitrogen over night.The mixture was melted in DSM midi extruder (15 g), at 240° C until a constant torque of the screw was obtained and the mixing was continued during 4 minutes. The torque was measured at different times. The mixing was carried out under a nitrogen blanket to prevent the risk of the polyamide decomposing as a result of oxidation.

Table 1 shows the compositions investigated and the results of the measurements.

**Table 1.**

| Measurement | Blank | Experiment 1 | Experiment 2 |
|---|---|---|---|
| | Blank | 1 eq Blocked HDI* | 2 eq Blocked HDI* |
| RPM | 80 | 80 | 80 |
| Mixing time | 40" | 45" | 45" |
| Total residence time | 4'40' | 4'45" | 4'45" |
| ηᵣₑₗ | 2,34 | 2,93 | 3,38 |
| Melt viscosity at ω = 1 rad/s in Pa-s | 550 | 1500 | 3500 |

| | | | |
|---|---|---|---|
| * One and two mol blocked isocyanate groups per mol amine end group of nylon-6. | | | |

The results of Experiments 2 and 3 show the surprisingly high activity of the blocked diisocyante, as a result of which a stable high value of the melt viscosity (expressed as the midi extruder moment of couple) was obtained after 2 minutes already, whereas this is not the case when no use is made of the blocked diisocyante. According to the-DSM measurements were the products strictly linear.

Thanks to this short reaction time, which is of the same order as the residence time in a normal extrusion, a stable, increased melt viscosity can be realized in practice.

The relative viscosity was, measured in a solution of 1 gram in 100 ml of 90 wt.% formic acid.

The melt viscosity was measured at 230 °C on a ARES DMS equipement.

The molecular weight of the polyamide or polyester having the lower molecular weight may vary over a wide range and is mainly determined by economical reasons and the source of the material. In general it may vary from about 1000 to about 20.000 expressed as number averaged molecular weight Mₙ. However situations are possible in which a mixture containing a polyamide or polyester of high molecular weight for instance 25.000 and an appreciable fraction oligomeric polyamide or polyester of molecular weight less than 1000 is reacted in the melt with the CBC according to the present invention.

The molecular weight of the high molecular weight polyamide or polyester to be produced by the process of the invention can be freely chosen and generally is higher than 15.000, preferably higher than 20.000, even more preferably higher than 25.000.

The polyamide or polyester obtained by the process of the invention can be processed by injection moulding, extrusion or blow moulding to obtain moulded articles, and by melt spinning to obtain fibres.

## Claims

1. Process for preparing a high-molecular polyamide, polyester, copolyesters or polyester-amide block copolymer by melt-mixing a polyamide, a polyester, copolyesters or a mixture of both having a lower molecular mass with an diisocyanate, **characterized in that** the diisocyanate is a blocked diisocyanate having the formula of figure 1.

2. Process according to Claim 1, **characterized in that** use is made of 0.05 to 4 wt.% of the blocked diisocyanate, relative to the polyamide, the polyester, the copolyester or the mixture of both.
